## Europäisches Patentamt
## European Patent Office
## Office européen des brevets

(19)

(11) Veröffentlichungsnummer: **0 131 236**
**B1**

(12)

# EUROPÄISCHE PATENTSCHRIFT

(45) Veröffentlichungstag der Patentschrift:
04.02.87

(21) Anmeldenummer: **84107691.2**

(22) Anmeldetag: **03.07.84**

(51) Int. Cl.⁴: **C 02 F 3/08, C 02 F 3/10**

(54) **Mechanisch-biologische Kläranlage zum Reinigen von Abwässern sowie Verfahren zum Klären von Abwässern.**

(30) Priorität: **09.07.83 DE 3324853**

(43) Veröffentlichungstag der Anmeldung:
**16.01.85 Patentblatt 85/3**

(45) Bekanntmachung des Hinweises auf die Patenterteilung:
**04.02.87 Patentblatt 87/6**

(84) Benannte Vertragsstaaten:
**AT BE CH FR GB IT LI LU NL SE**

(56) Entgegenhaltungen:
**EP-A-0 067 028**
**BE-A-861 615**
**CH-A-50 963**
**CH-A-561 666**
**DE-A-2 303 657**
**DE-A-3 143 929**
**GB-A-508 881**
**GB-A-550 926**

(73) Patentinhaber: **Water Engineering and Plant Construction GtA reg.Trust, Post Box 183, FL-9490 Vaduz (LI)**

(72) Erfinder: **Zimmer, Erich GtA (Nig) Ltd., 61- 63 Aba Johnston St. P.O. Box 2065, Ikeja- Nigeria (NG)**

(74) Vertreter: **Patentanwälte Dipl.- Ing. F.W. Möll Dipl.- Ing. H.Ch. Bitterich, Langstrasse 5 Postfach 2080, D-6740 Landau (DE)**

## Beschreibung

Die Erfindung betrifft eine mechanisch-biologische Kläranlage zum Reinigen von Abwässern, mit einem zylinderförmigen, in das Abwasser eintauchenden, rotierenden Tauchkörper, der ein gelochtes Außenrohr, gelochte Stirnbleche und Achszapfen sowie Glieder zum Eintragen von Luft in das Abwasser aufweist und mit Füllkörpern als Aufwuchskörper für biologischen Rasen gefüllt ist. Sie betrifft ferner ein Verfahren zum Klären von Abwässern unter Anwendung dieser Vorrichtung.

Eine Kläranlage mit einem derartigen Tauchkörper ist bekannt aus der DE-A-23 03 657. Der Tauchkörper hat die Form eines Zylinders. Die beiden Stirnwände werden gebildet durch ein in Kreisform gebogenes Rohr und sechs zwischen diesem Rohr und einer hohlen Mittelwelle angeordneten rohrförmigen Stützen nach Art der Speichen eines Rades, wobei die Zwischenräume zwischen den Rohren durch ein Netz abgedeckt sind. Auch die Mantelfläche des Zylinders ist mit einem Netz abgedeckt, das mit Hilfe von in gleichen Abständen untereinander über die Mantelfläche des Zylinders verteilten und zur Zylinderachse parallelen Streben in Position gehalten wird. Innerhalb und in unmittelbarer Nähe jeder Strebe sind zu den Streben parallele Rohre vorgesehen, die in Umlaufrichtung gesehen auf ihrer Vorderseite schlitzförmige Öffnungen haben. Der Innenraum des Tauchkörpers ist mit hohlen Füllkörpern gefüllt.

Die geschlitzten Rohre dienen einerseits dazu, Flüssigkeit hochzuheben und sie über die ausgetauchten Füllkörper zu gießen, und andererseits, Luft in die Flüssigkeit hinunterzutragen. Die Anordnung des Tauchkörpers erfolgt so, daß der Abwasserspiegel gleich unterhalb der zentralen Welle liegt. Durchmesser und Drehzahl sind so aufeinander abgestimmt daß die Geschwindigkeit am Umfang des Tauchkörpers zwischen 0,1 und 0,3 m/sec liegt.

Eine weitere Kläranlage ist aus der BE-A 861 615 bekannt. Deren Tauchkörper besitzt ebenfalls eine zentrale, angetriebene Achse und zwei Stirnwände, gebildet aus radialen Stützen nach Art von Radspeichen und einem die Enden der Speichen verbindenden Felgenkranz. Zwischen den beiden Stirnwänden sind konzentrische Zylinder als Aufwuchskörper für den biologischen Rasen angeordnet. Diese Zylinder sind entweder gelocht oder bestehen aus Zylinderabschnitten, um den Durchtritt des Abwassers zu ermöglichen. Im Betrieb taucht der Tauchkörper zu etwa einem Drittel seines Durchmessers in das Abwasser ein.

Eine andere Art von Tauchkörpern ist bekannt aus der EP-A-67 028. Es handelt sich hier um eine Anordnung mit einer zentralen, angetriebenen Welle und einem konzentrisch dazu angeordneten Schaufelkranz nach Art eines Mühlrades. Zwischen Welle und Schaufelkranz sind nach Art von Radspeichen eine Vielzahl von Kammern angeordnet, die beim Austauchen Abwasser hochheben und beim Eintauchen Luft in das Abwasser eintragen. Füllkörper als Aufwuchskörper für den biologischen Rasen sind nicht vorgesehen. Im Betrieb taucht die Trommel zur Hälfte in das Abwasser ein. Aufgrund des großen Wasserwiderstandes von Schaufelkranz und Kammern dreht dieser Tauchkörper sehr langsam.

Außer diesen Kläranlagen gibt es noch eine große Vielzahl weiterer, die alle nach dem gleichen Prinzip konstruiert sind. Alle Konstruktionen versuchen, zusätzliche Luftmengen in das Abwasser einzutragen und gleichzeitig die Tauchkörper tiefer in das Abwasser eintauchen zu lassen. Diese Ziele wurden bisher jedoch nicht oder nur zu einem ganz unbedeutenden Teil erreicht. Von wesentlicher Bedeutung ist dabei unter anderem auch der spezifische Energieverbrauch, das heißt das Verhältnis von mechanischer Antriebsleistung für den rotierenden Tauchkörper zur biologischen Abbauleistung.

Da mit den eingangs geschilderten Anlagen diese Ziele nicht erreicht werden konnten, sind heute andere Arten von Tauchkörpern üblich. Es handelt sich dabei um eine Vielzahl von zylindrischen Teilkörpern, die mit den bekannten, in Schichten aufeinandergelegten Platten aus Kunststoff mit geeigneter Oberfläche gefüllt sind und mit Hilfe von speichenartigen Streben an einer zentralen Antriebswelle befestigt sind. Die Teilkörper dieser Tauchkörper sind entweder ganz aus dem Abwasser ausgetaucht oder ganz in das Abwasser eingetaucht, wobei auch hier wieder durch entsprechende Teillochung der Außenhaut Luft mit in das Abwasser eingetragen wird. Diese heute überwiegend verwendeten Ausführungsformen von Tauchkörpern sind beispielsweise in den DE-A-25 38 656 bzw. 27 27 991 dargestellt.

Der vorliegenden Erfindung liegt die Aufgabe zugrunde, eine mechanisch-biologische Kläranlage der eingangs beschriebenen Art anzugeben, deren Tauchkörper bei einfachster mechanischer Konstruktion eine große Stabilität besitzt und einen verbesserten Eintrag von Luft-Sauerstoff sowie Bewegungsenergie in das Abwasser mit verbessertem Wirkungsgrad ermöglicht, was zu einer größeren Klärwirkung bzw. zu einer größeren Belastbarkeit der Kläranlage führt.

Diese Aufgabe wird dadurch gelöst, daß konzentrisch zum Außenrohr ein Innenrohr angeordnet ist, daß die Lochungen im Außenrohr als Langlöcher ausgebildet sind und daß die aus den Langlöchern ausgestanzten Blechteile - in Drehrichtung des Tauchkörpers - S-förmig über die Kontur des Außenrohres herausgebogen sind.

Eine alternative Lösung besteht darin, daß konzentrisch zum Außenrohr ein Innenrohrangeordnet ist und daß das Außenrohr mit Schaufeln ähnlich Turbinenschaufeln bestückt ist.

Beiden Lösungen liegt das selbe Prinzip zugrunde, nämlich die Drehgeschwindigkeit des Tauchkörpers erheblich zu steigern, da nur dann die unter den Abwasserspiegel mitgerissene Luft ausreichend feinblasig verteilt wird. Gleichzeitig muß dafür gesorgt werden, daß der Wasserwiderstand des schnell rotierenden Tauchkörpers entsprechend reduziert wird, um die Antriebsleistung nicht unnötig hoch werden zu lassen. Durch die spezielle Ausgestaltung des Außenrohrs ist es gelungen, diese beiden zunächst gegensätzlich erscheinenden Forderungen zu vereinen.

Die vorliegende Erfindung vermeidet weitgehend die bei den bisherigen Kläranlagen zu unterscheidenden Arbeitsphasen: Auftauchphase für die Sauerstoffanreicherung und Eintauchphase für den biologischen Abbau. Der schnell rotierende Tauchkörper erzeugt das innig verwirbelte, kleinblasige Abwasser-Luft-Gemisch im Klärbecken, so daß der auf den Füllkörpern wachsende biologische Rasen sich ständig in einem Medium aufhält, welches sowohl Sauerstoffanreicherung als auch biologischen Abbau ermöglicht. Hierdurch ergibt sich die Möglichkeit, die Füllkörper des Tauchkörpers fast ständig unterhalb des Wasserspiegels im Klärbecken zu halten. Der Tauchkörper muß nur soweit auftauchen, daß die Profilierung des Außenrohres genügend Luft in das Abwasser eintragen kann.

Da zur Erzeugung des innig verwirbelten Abwasser-Luft-Gemisches der Tauchkörper mit einer erheblich größeren Drehzahl rotiert als die derzeit verwendeten Tauchkörper, besteht gleichzeitig die Möglichkeit, eine erhöhte Bewegungsenergie in das Abwasser einzuleiten. Dadurch wird das unerwünschte Absetzen von Klärschlamm auch bei großen Becken verhindert und insgesamt eine größere effektive Verweilzeit des Abwassers erreicht. Der rotierende Tauchkörper wirkt wie eine Zentrifugalpumpe, die das Abwasser axial in den Tauchkörper einsaugt und radial an der Zylinderfläche herausdrückt. Dadurch wird nochmehr Abwasser an den auf den Füllkörpern sitzenden biologischen Rasen herangeführt und gleichzeitig ein Verschlammen oder Zuwachsen des Tauchkörpers gebremst. Alles zusammen ist für die erhöhte Klärwirkung bzw. die erhöhte Belastbarkeit der Anlage günstig.

Gemäß einer vorteilhaften Weiterbildung der Erfindung sind im Tauchkörper radiale, gelochte und vorzugsweise gewölbte Schotten vorgesehen. Diese Schotten teilen das Innere des Tauchkörpers in mehrere Kammern auf und verhindern so eine großflächige Bewegung der Füllkörper, die Anlaß zu einer vorzeitigen Zerstörung der Füllkörper oder zu einem unerwünschten Abrieb des biologischen Rasens sein könnte.

Gemäß einer vorteilhaften Weiterbildung ist das Innenrohr mit Luft gefüllt. Es erzeugt auf diese Weise einen Auftrieb, der nicht nur das Gewicht des Innenrohrs selbst, sondern auch einen Teil des Gewichts der übrigen Konstruktion kompensiert. Die Größe dieses Auftriebs ist abhängig vom Durchmesser des Innenrohrs, wobei ein Kompromiß gefunden werden muß zwischen der Größe des Auftriebs und der Größe des für die Füllkörper noch zur Verfügung stehenden Raums zwischen Innenrohr und Außenrohr.

Aufgrund der hohen Stabilität der erfindungsgemäßen Konstruktion trotz der Verwendung relativ dünnwandiger Bleche für die Rohre und die Stirnbleche, kann der rotierende Tauchkörper ohne weiteres Baulängen von bis zu 10 m erhalten, ohne daß Festigkeitsprobleme entstehen. Gemäß einer vorteilhaften Weiterbildung sind dann die Achszapfen direkt an den Stirnblechen befestigt. Eine durchgehende zentrale Achse kann ohne weiteres entfallen.

Es ist leicht anzusehen, daß die mit der Erfindung zu erreichenden Vorteile naturgemäß durch eine besondere Konstruktion der Füllkörper noch unterstützt werden. Hierzu besitzen diese vorzugsweise eine Kugelform mit einer Reihe von Stegen, die durch Zwischenräume voneinander getrennt sind, wobei Form und Abmessung so gewählt sind, daß benachbarte Füllkörper nicht ineinander verhaken, andererseits aber das Abwasser-Luft-Gemisch einwandfreien Zutritt zum biologischen Rasen hat. Dadurch wird eine große Menge von biologischem Rasen im Tauchkörper gebildet, gleichzeitig aber auch ein Verschlammen verhindert, da zwischen den einzelnen Füllkörpern ausreichend Platz für das durchströmende Abwasser bleibt.

Das besondere an dem unter Verwendung des erfindungsgemäßen Tauchkörpers arbeitenden Klärverfahren ist also die hohe Rotationsgeschwindigkeit am Umfang des Außenrohrs. Diese ist so hoch, daß im Klärbecken ein innig verwirbeltes und durchmischtes, kleinblasiges Abwasser-Luft-Gemisch entsteht, in dem ständig die den biologischen Rasen tragenden Aufwuchskörper bewegt werden. Optimale Verhältnisse ergeben sich bei einer Rotationsgeschwindigkeit am Umfang des Außenrohres zwischen 0,9 und 5 m/sec, insbesondere zwischen 0,9 und 1,6 m/sec.

Aufgrund dieser Eigenart kann der mit Füllkörpern gefüllte Raum des Tauchkörpers praktisch vollständig, insbesondere zu mehr als 75 % seines Durchmessers unterhalb der Wasserlinie rotieren. Läßt man den mit Füllkörpern gefüllten Raum wenigstens teilweise auftauchen, so dienen die Füllkörper selbst zusätzlich als Schaufelelemente, die eine erhebliche Menge an Luft-Sauerstoff mit in das Abwasser eintragen. So zeigt die Erfahrung, daß noch lange nach Abstellen der Drehbewegung Luftblasen aus den Bewuchskörpern hochsteigen. Auch wenn diese Blasenbildung zur Ruhe gekommen ist, enthalten die Bewuchskörper noch erhebliche Mengen an Luft, die bei einem vorsichtigen Weiterdrehen des Tauchkörpers ausperlt.

Solange jedoch dem biologischen Rasen sowohl Abwasser als auch Luft zur Verfügung stehen, wird der Klärschlamm abgebaut.

Weitere Ausgestaltungen der Erfindung sowie deren Vorteile ergeben sich aus den weiteren Unteransprüchen sowie der nachfolgenden Beschreibung von Ausführungsbeispielen anhand der Zeichnung. Es zeigen

Fig. 1 einen Querschnitt durch ein Klärbecken mit einem teilweise geschnittenen und gebrochenen Tauchkörper,

Fig. 2 einen Querschnitt durch einen Tauchkörper mit unterschiedlichen Konstruktionsdetails,

Fig. 3 einen Querschnitt durch eine weitere Ausführungsform eines Tauchkörpers,

Fig. 4 einen Querschnitt durch eine Schaufel, mit der der Tauchkörper bestückt wird,

Fig. 5 einen Querschnitt durch eine weitere Ausführungsform eines Tauchkörpers,

Fig. 6 ein Schaubild zur Darstellung des Zusammenhangs zwischen Drehgeschwindigkeit des Tauchkörpers, dem leistungsspezifischen Sauerstoffeintrag ins Abwasser und der leistungsspezifischen biologischen Abbauleistung und

Fig. 7 einen Querschnitt durch einen Füllkörper.

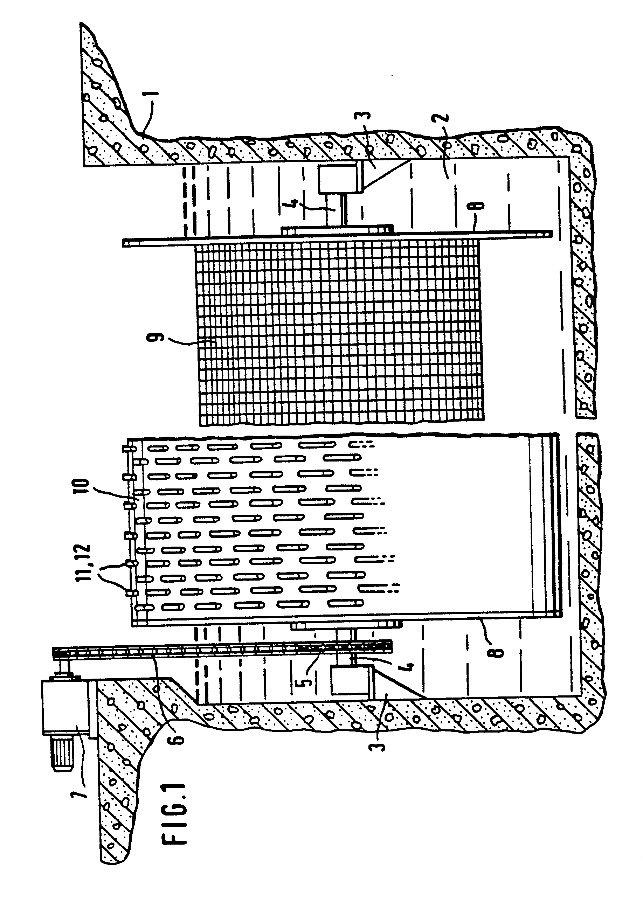

In Fig. 1 erkennt man einen Querschnitt durch eine Kläranlage 1 mit Klärbecken 2. Am Rand des Klärbeckens sind auf halber Höhe Lager 3 befestigt. In den Lagern 3 laufen Achszapfen 4, die die Verbindung zu dem eigentlichen Tauchkörper herstellen, der aus einem gelochten Innenrohr 9 und einem gelochten Außenrohr 10 besteht, welche stirnseitig über Stirnbleche 8 miteinander und mit den Achszapfen 4 verbunden sind. Auf dem linken Achszapfen 4 ist eine Antriebsscheibe 5 montiert, auf der ein Antriebsmittel 6, beispielsweise eine Kette läuft, welche die Antriebsenergie eines Getriebemotors 7 auf den Achszapfen 4 und damit auf den Tauchkörper 8, 9, 10 überträgt.

Das Innenrohr 9 besteht aus Blech, welches durch Ausstanzungen eine Gitterform erhalten hat. Damit wird ein optimaler Durchtritt von Abwasser bzw. Abwasser-Luft-Gemisch erreicht.

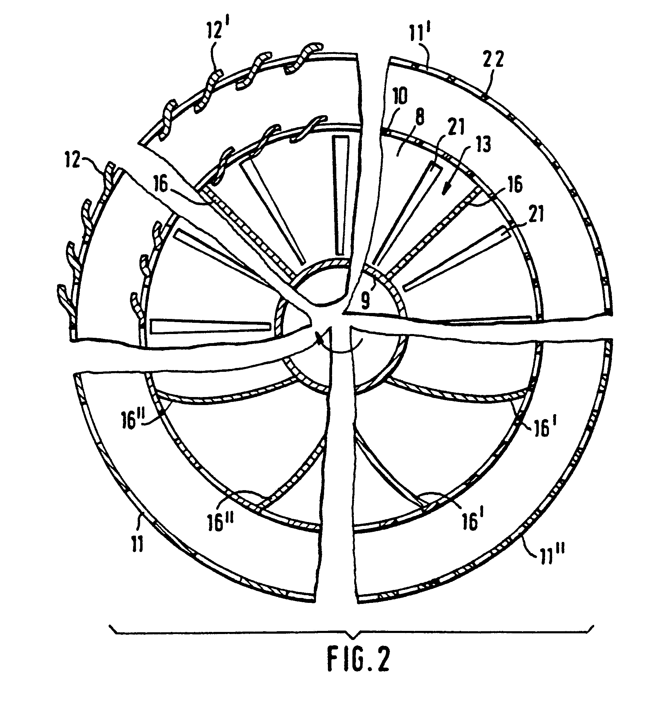

Das Außenrohr 10 ist mit einer regelmäßigen Anordnung von Langlöchern 11 versehen. Das aus den Langlöchern ausgestanzte Blechmaterial ist S-förmig über die Außenkontur des Außenrohres 10 herausgebogen, wie bei Fig. 2 besser zu sehen ist. Diese S-förmigen Metallzungen 12 bilden Schaufeln, die das Abwasser in Bewegung versetzen, wodurch ein Absetzen von Klärschlamm am Boden des Beckens 2 verhindert wird, und tragen bei ausreichender Drehzahl Luft-Sauerstoff in das Abwasser ein.

Wie aus Fig. 1 weiterhin zu sehen ist, taucht der Tauchkörper so weit in das Abwasser ein, daß das Außenrohr 10, das mit Füllkörpern gefüllt ist, annähernd vollständig im Abwasser rotiert. Durch das Eintragen von großen Mengen Luft in das Abwasser durch Erzeugen des Abwasser-Luft-Gemisches kann auf die bisher übliche Unterscheidung zwischen Auftauchphase und Eintauchphase nahezu verzichtet werden.

Die durchgeführten Versuche haben gezeigt, daß der Wasserspiegel dort, wo der Tauchkörper aus dem Abwasser auftaucht, höher steigt als im übrigen Becken. Durch die spezielle Formgebung des Tauchkörpers sowie durch die Zentrifugalkraft entsteht eine Strömung, die Luft und Abwasser aus dem Becken axial in den Tauchkörper und damit zu den Füllkörpern bzw. zu dem biologischen Rasen pumpt.

In Fig. 2 erkennt man einen Querschnitt durch eine weitere Ausführungsform eines Tauchkörpers, wobei in den einzelnen Quadranten unterschiedliche Varianten für die Gestaltung der Einzelteile des Tauchkörpers dargestellt sind. Man erkennt zunächst ein ungelochtes Innenrohr 9, konzentrisch dazu das gelochte Außenrohr 10 und wiederum konzentrisch hierzu ein ebenfalls gelochtes Schaufelrohr 22. Das Innenrohr 9 ist mit Luft gefüllt. Da das Innenrohr 9 ständig in das Abwasser eingetaucht ist, liefert es einen zusätzlichen Auftrieb, der nicht nur das Gewicht des Innenrohrs 9 selbst, sondern auch einen Teil des Gewichts der übrigen Konstruktion kompensiert. Dadurch werden die Lager entlastet und Antriebsenergie eingespart.

Außenrohr 10 und gegebenenfalls Schaufelrohr 22 können in den unterschiedlichsten Arten profiliert sein. Dargestellt sind beispielsweise S-förmige, aus den Langlöchern 11 herausgebogene Blechzungen 12 oder auch S-förmig gebogene Blechzungen 12', die teilweise außerhalb, teilweise innerhalb der Außenkontur der Rohre 10, 22 liegen.

Auch die Lochungen der Rohre 10, 22 können unterschiedlich gestaltet sein. So sind die Lochungen 11 etwas größer als die stehenbleibenden Metallstege, die Lochungen 11' erheblich größer als die stehenbleibenden Metallstege und die Lochungen 11'' ebenso groß wie die Metallstege. Die Erfahrung hat gezeigt, daß bei ausreichender Umfangsgeschwindigkeit ein Sog- oder Düseneffekt an den Langlöchern entsteht, der Luft unter die Wasseroberfläche saugt und diese in feinste Blasen zerteilt, und daß dieser Effekt durch die Zungen 12, 12' noch erheblich verstärkt wird.

Wie schon vorstehend erwähnt, entsteht im Klärbecken durch die gemeinsame Wirkung der Außenkontur des Tauchkörpers und der Zentrifugalkraft eine Strömung, die das Abwasser axial in den Tauchkörper hinein und radial aus dem Tauchkörper heraus pumpt. Um diese Strömung zu ermöglichen, sind in den Stirnblechen 8 Öffnungen, beispielsweise radiale Schlitze 21, vorgesehen.

Die Größe der Schlitze 21 und ebenso die Größe der Lochungen 11 im Außenrohr 10 ist auf die Größe der Tauchkörper so abzustimmen, daß diese den Raum 13 zwischen Innenrohr 9 und Außenrohr 10 nicht verlassen können.

Die Zentrifugalkraft kann erheblich verändert - verstärkt oder verringert - werden durch den Einbau von radialen Schotten 16, 16', 16''. Diese Schotten 16, 16', 16'', die den Innenraum 13 gleichzeitig in Kammern unterteilen, wirken in Verbindung mit der relativ hohen Umfangsgeschwindigkeit des Tauchkörpers wie die Flügel einer Kreiselpumpe. Durch geeignete Formgebung der Schotten 16 kann dieser Effekt verstärkt oder abgeschwächt werden. Sind die Schotten 16' in Drehrichtung konvex, so wird die Wirkung verstärkt, wobei gleichzeitig der Widerstandswert verringert wird; sind die Schotten 16'' in Drehrichtung konkav, so kann bei geeigneter Winkelstellung die nach außen gerichtete Zentrifugalkraft durch die nach innen gerichtete Schaufelkraft verringert werden.

Im Zusammenhang mit der Pumpwirkung der Schotten 16,16' dürfte es von Vorteil sein, auch das Innenrohr wasserdurchlässig zu gestalten. Auf diese Weise kann das Abwasser durch das Innenrohr 9 zentral zugeführt und anschließend radial durch den von den Füllkörpern gefüllten Raum 13 nach außen gepumpt werden.

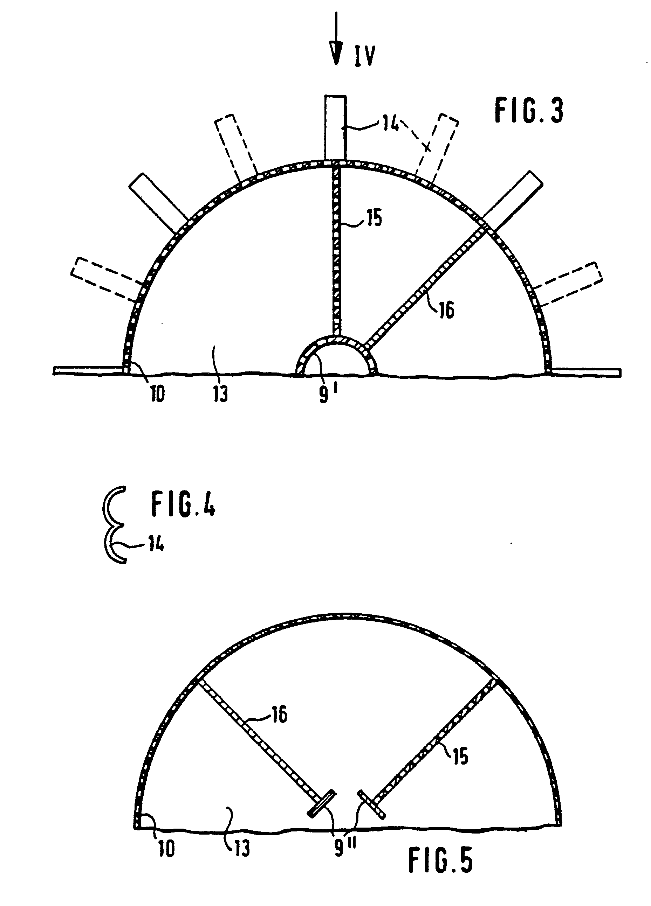

Fig. 3 zeigt ebenfalls im Querschnitt eine weitere Ausführungsform für einen Tauchkörper mit Innenrohr 9' und Außenrohr 10. Der Raum 13 zwischen den beiden Rohren ist mit Hilfe von Schotten 15, 16 abgeteilt, wobei die Schotten 15 gelocht, die Schotten 16 ungelocht sein können. Am Außenrohr sind Schaufeln 14 befestigt, deren Querschnitt beispielsweise dem Querschnitt von Pelton-Turbinen entspricht, wie in Fig. 4 dargestellt ist. Diese Schaufeln 14, die entweder allein oder auch zusätzlich zu den S-förmig gebogenen Zungen 12 vorgesehen sein können, tragen Luft und Bewegungsenergie in das Abwasser ein. Anstelle der Schaufeln 14, die einzeln angebracht werden müssen, besteht auch die Möglichkeit, ein zusätzliches Rohr als Schaufelrohr für die Belüftung und Bewegung vorzusehen.

Die Schotten 15, 16 begrenzen nicht nur den Bewegungsraum für die Füllkörper, sondern versteifen gleichzeitig die Gesamtkonstruktion des Tauchkörpers, was insbesondere dann von Vorteil ist, wenn es sich um sehr lange Rohre 9', 10 mit geringem Außendurchmesser handelt.

Fig. 5 zeigt eine weitere Ausführungsform für einen Tauchkörper im Querschnitt. Hier ist das Innenrohr 9'' als polygonaler Blechzylinder ausgebildet mit durchgehenden Längsschlitzen. Zur Bildung der Längsschlitze wurden die Blechtafeln des Innenrohres 9'' nicht bzw. nur punktweise miteinander verschweißt. Sie werden durch die Schotten 15, 16 am Außenrohr 10 gehalten. Das Außenrohr 10 kann, wie anhand der Fig. 1 bis 4 bereits beschrieben, sowohl mit Schaufeln 14 als auch mit S-förmig gebogenen Zungen 12, 12' bestückt sein. Auch ein Schaufelrohr 22 ist möglich.

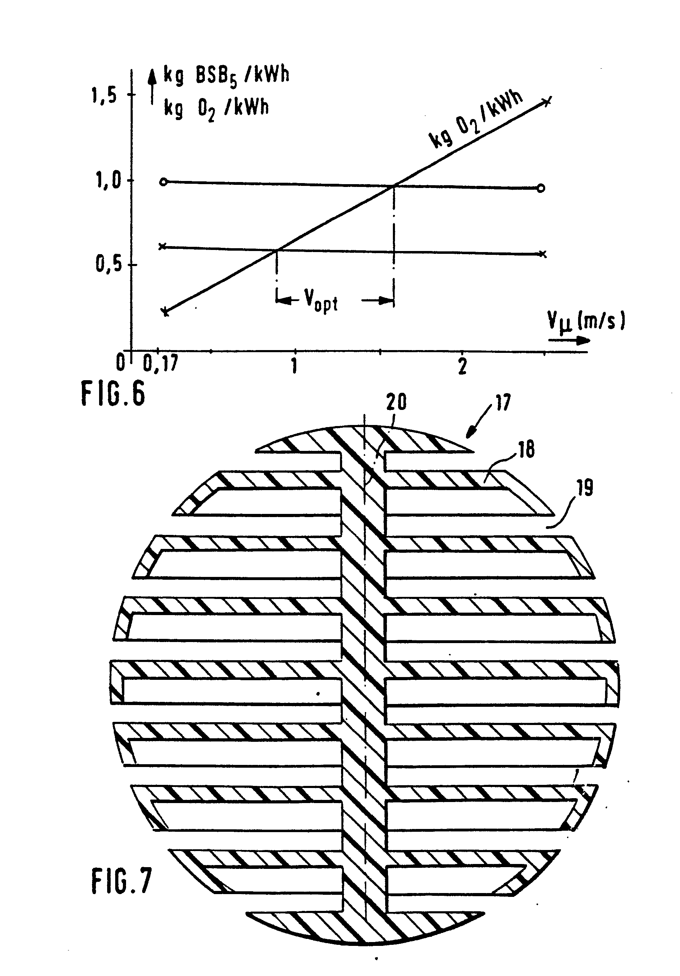

Fig. 6 zeigt ein Schaubild, bei dem in einem rechtwinkeligen Koordinatensystem auf der X-Achse die Geschwindigkeit $V_u$ am Umfang des Außenrohres 10 in m/s und auf der Y-Achse die spezifische biologische Abbauleistung kg $BSB_5$ pro kWh bzw. der spezifische Sauerstoffeintrag in kg $O_2$ ebenfalls pro kWh dargestellt sind. Mit zunehmender Umfangsgeschwindigkeit $V_u$ steigt der spezifische Sauerstoffeintrag ins Abwasser. Mit dem Wert 0,17 ist die Umfangsgeschwindigkeit eines derzeit am Markt weitverbreiteten Tauchkörpers angegeben, der etwa dem Gegenstand der DE-OS 27 27 991 entspricht, während die heute gebräuchlichen Oberflächenbelüfter mit einer Umfangsgeschwindigkeit von 2,5 m/sec. arbeiten.

Die spezifische Abbauleistung wurde in das Schaubild parametermäßig eingetragen und zwar mit 0,6 bzw. 1,0 kg $BSB_5$/kWh. Der Wert von 1,0 kg $BSB_5$/kWh entspricht der soeben genannten Anlage gemäß DE-OS 27 27 991; der Wert 0,6 entspricht den bekannten Belebungsverfahren mit horizontalachsigen Oberflächenbelüftern. Dabei handelt es sich um Mittelwerte aus verschiedenen Messungen. Es ist klar, daß die spezifische biologische Abbauleistung nicht linear mit der Antriebsleistung für den Tauchkörper gesteigert werden kann, da es sich hier um einen biologischen Prozeß handelt, der im wesentlichen von dem Angebot an Sauerstoff einerseits und Nährstoffen, d.h. Abwasser, andererseits abhängig ist. Dem Schaubild kann entnommen werden, daß ein optimaler Geschwindigkeitsbereich $V_{opt}$ zwischen 0,9 und 1,6 m/s liegt. Ein optimales Abwasser-Luft-Gemisch läßt sich bei Umfangsgeschwindigkeiten bis 5 m/sec. erreichen. Die Umfangsgeschwindigkeit des erfindungsgemäßen Tauchkörpers liegt somit fünf- bis zehnmal höher als bei den derzeit üblichen Tauchkörpern.

Fig. 7 schließlich zeigt einen Querschnitt durch einen Füllkörper 17, vorzugsweise aus Kunststoff. Man erkennt beidseits einer Mittelebene 20 zwei Reihen von Stegen 18 und Zwischenräumen 19, die einander abwechseln. Da biologischer Rasen sich auch an der Innenoberfläche der Stege 18 bildet, müssen die Zwischenräume 19 breit genug sein, um einen ungehinderten Zutritt von Abwasser-Luft-Gemisch ohne Gefahr der Verstopfung zu erlauben. Der Durchmesser eines solchen Füllkörpers 17 beträgt ca. 5 cm.

Zwischen den einzelnen Füllkörpern 17 besteht genügend Zwischenraum, durch den das Abwasser-Luft-Gemisch hindurchströmen kann. Bei rotierendem Tauchkörper werden die Füllkörper 17 ständig umgewälzt, so daß eine mechanische Reinigung von abgestorbener Biomasse erzielt wird. Nur junger, aktiver, gut haftender Bio-Rasen, der Polyuronide ausscheidet, verbleibt an den Füllkörpern und bewirkt die kräftige Abwasserreinigung. Außerdem ist dieser aktive Bio-Rasen unempfindlicher gegen Schwankungen in der Abwasserbelastung.

Um zu verhindern, daß benachbarte Füllkörper 17 ineinander verhaken, wodurch die Gefahr der Verstopfung und Verschlammung vergrößert würde, muß wenigstens an der kugelförmigen Oberfläche und dort auch nur wenigstens teilweise die Breite der Stege 18 größer sein als die Breite der Zwischenräume 19. Die sonstige Ausgestaltung der inneren Oberfläche - damit ist der Teil der Kunststoff-Oberfläche gemeint, der nicht Teil der Kugelfläche ist - kann dann so gewählt werden, daß eine optimale Klärwirkung und eine minimale Verschlammung erreicht werden.

Ein wesentlicher Vorteil der Erfindung neben der bereits erwähnten erhöhten biologischen Abbauleistung liegt darin, daß die Tauchkörpertrommel in praktisch beliebiger Länge gebaut werden kann. So sind Spannweiten zwischen den Lagern von fünf bis zehn Metern denkbar. Dies ist möglich durch den Verzicht auf eine durchgehende zentrale Achse, auf der die sonstige Konstruktion befestigt wird. Die gewählte Konstruktion aus Außen- und Innenrohr ermöglicht es demgegenüber durch entsprechende Wahl von Blechstärke und Rohrdurchmesser, die Durchbiegung zwischen den Achslagern auf einen vertretbaren Wert zu begrenzen, wobei durch Verwendung eines luftgefüllten Innenrohres diese Werte noch weiter gesteigert werden können.

**Patentansprüche**

1. Mechanisch-biologische Kläranlage zum Reinigen von Abwässern, mit einem zylinderförmigen, in das Abwasser eintauchenden, rotierenden Tauchkörper, der ein gelochtes Außenrohr (10), gelochte Stirnbleche (8) und Achszapfen (4) sowie Glieder (11, 12, 14) zum Eintragen von Luft in das Abwasser aufweist und mit Füllkörpern (17) als Aufwuchskörper für biologischen Rasen gefüllt ist, dadurch gekennzeichnet, daß konzentrisch zum Außenrohr (10) ein Innenrohr (9) angeordnet ist, daß die Lochungen im Außenrohr (10) als Langlöcher (11) ausgebildet sind und daß die aus den Langlöchern (11) ausgestanzten Blechteile (12) - in Drehrichtung des Tauchkörpers - S-förmig über die Kontur des Außenrohres (10) herausgebogen sind.

2. Mechanisch-biologische Kläranlage zum Reinigen von Abwässern, mit einem zylinderförmigen, in das Abwasser eintauchenden, rotierenden Tauchkörper, der ein gelochtes Außenrohr (10), gelochte Stirnbleche (8) und Achszapfen (4) sowie Glieder (11, 12, 14) zum Eintragen von Luft in das Abwasser aufweist, und mit Füllkörpern (17) als Aufwuchskörper für biologischen Rasen gefüllt ist, dadurch gekennzeichnet, daß konzentrisch zum Außenrohr (10) ein Innenrohr (9) angeordnet ist und daß das Außenrohr (10) mit Schaufeln (14) ähnlich Turbinenschaufeln bestückt ist. 3. Kläranlage nach Anspruch 1 oder 2, dadurch gekennzeichnet, daß im Tauchkörper radiale, gelochte und vorzugsweise gewölbte Schotten (15, 16) vorgesehen sind.

4. Kläranlage nach Anspruch 1, 2 oder 3, dadurch gekennzeichnet, daß das Innenrohr (9) mit Luft gefüllt ist.

5. Kläranlage nach Anspruch 1, 2, 3 oder 4, dadurch gekennzeichnet, daß die Achszapfen (4) an den Stirnblechen (8) befestigt sind.

6. Kläranlage nach Anspruch 1, 2, 3, 4 oder 5, dadurch gekennzeichnet, daß die Füllkörper (17) eine große innere Oberfläche besitzen, wobei ihre Konturen so ausgebildet sind, daß das Abwasser-Luft-Gemisch zwischen ihnen hindurchströmen kann.

7. Kläranlage nach Anspruch 6, dadurch gekennzeichnet, daß die Füllkörper (17) Kugelform und zwei Reihen von Stegen (18) und Zwischenräumen (19) besitzen und daß die Stege (18) und die Zwischenräume (19) so gestaltet sind, daß ein Verhaken benachbarter Füllkörper (17) verhindert wird.

8. Verfahren zum Klären von Abwässern, unter Verwendung einer mechanisch-biologischen Kläranlage nach den Ansprüchen 1 bis 7, dadurch gekennzeichnet, daß die Rotationsgeschwindigkeit ($V_u$) am Umfang des Außenrohres (10) zwischen 0,9 und 5 m/sec, insbesondere zwischen 0,9 und 1,6 m/sec liegt.

9. Verfahren nach Anspruch 8, dadurch gekennzeichnet, daß der mit Füllkörpern (17) gefüllte Raum (13) des Tauchkörpers zu mehr als 75 % seines Durchmessers unterhalb der Wasserlinie (W.L.) rotiert.

**Claims**

1. A mechanical-biological treatment installation for the purification of waste water, having a cylindrical rotating submersible body immersed in the waste water, which body has a perforated outer tube (10), perforated end plates (8) and stub axles (4) as well as elements (11, 12, 14) for feeding air into the waste water and is filled with packing members (17) as culture elements for biological lawn, characterised in that an inner tube (9) is disposed concentrically with the outer tube (10), in that the holes in the outer tube (10) are in the form of slots (11) and in that the strip portions (12) punched out of the slots (11) are bent out (in the direction of rotation of the submersible body) S-shaped over the contour of the outer tube (10).

2. A mechanical-biological treatment installation for the purification of waste water, having a cylindrical rotating submersible body immersed in the waste water, which body has a perforated outer tube (10), perforated end plates (8) and stub axles (4) as well as elements (11, 12, 14) for feeding air into the waste water and is filled with packing members (17) as culture elements for biological lawn, characterised in that an inner tube (9) is disposed concentrically with the outer tube (10) and in that the outer tube (10) is provided with blades (14) similar to turbine blades.

3. A treatment installation according to Claim 1 or 2, characterised in that radial perforated and, preferably, curved partitions (15, 16) are provided in the submersible body.

4. A treatment installation according to Claims 1, 2 or 3, characterised in that the inner tube (9) is filled with air.

5. A treatment installation according to Claims 1, 2, 3 or 4, characterised in that the stub axles (4) are secured to the end plates (8).

6. A treatment installation according to Claims 1, 2, 3, 4 or 5, characterised in that the packing members (17) have a large internal surface area, their contours being so shaped that the waste water-air mixture can flow through between them.

7. A treatment installation according to Claim 6, characterised in that the packing members (17) are spherical and have two rows of webs (18) and intermediate spaces (19), and in that the webs (18) and the intermediate spaces (19) are shaped so as to prevent interlocking with adjacent packing members (17).

8. A method of purifying waste water using a mechanical-biological treatment installation according to Claims 1 to 7, characterised in that the speed of rotation ($V_u$) at the periphery of the outer tube (10) is between 0.9 and 5 m/sec., in particular between 0.9 and 1.6 m/sec.

9. A method according to Claim 8, characterised in that the space (13) in the submersible body filled with the packing members (17) rotates with more than 75% of its diameter below the water line (W.L.).

**Revendications**

1. Installation mécanique et biologique pour l'épuration d'eaux usées, avec un corps plongeur rotatif de forme cylindrique immergé dans les eaux usées, qui présente un tube extérieur perforé (10), des tôles frontales perforées (8) et des tourillons (4) ainsi que des éléments (11, 12, 14) pour introduire de l'air dans les eaux usées, et qui est rempli de corps de remplissage (17) comme corps d'accroissance pour des pellicules biologiques, caractérisée en ce qu'un tube intérieur (9) est disposé concentriquement au tube extérieur (10), en ce que les perforations du tube extérieur se présentent sous la forme de trous oblongs (11), et en ce que les parties de tôle (12) découpées à partir des trous oblongs (11) sont dans le sens de rotation du corps plongeur- courbées vers l'extérieur en forme de S au-dessus du contour du tube extérieur (10).

2. Installation mécanique et biologique pour l'épuration d'eaux usées, avec un corps plongeur rotatif de forme cylindrique immergé dans les eaux usées, qui présente un tube extérieur perforé (10), des tôles frontales perforées (8) et des tourillons (4) ainsi que des éléments (11, 12, 14) pour introduire de l'air dans les eaux usées, et qui est rempli de corps de remplissage (17) comme corps d'accroissance pour des pellicuies biologiques, caractérisée en ce qu'un tube intérieur (9) est disposé concentriquement au tube extérieur (10), et en ce que le tube extérieur (10) est équipé d'aubes (14) semblables à des aubes de turbine.

3. Installation d'épuration selon la revendication 1 ou 2, caractérisée en ce que des capsules (15, 16) radiales, perforées et de préférence courbes sont prévues dans le corps plongeur.

4. Installation d'épuration selon la revendication 1, 2 ou 3, caractérisée en ce que le tube intérieur (9) est rempli d'air.

5. Installation d'épuration selon la revendication 1, 2, 3 ou 4, caractérisée en ce que les tourillons (4) sont fixés sur les tôles perforées (8).

6. Installation d'épuration selon la revendication 1, 2, 3, 4 ou 5, caractérisée en ce que les corps de remplissage (17) possèdent une grande surface intérieure, leurs contours étant configurés de telle sorte que le flux de mélange d'air et d'eaux usées peut passer entre eux.

7. Installation d'épuration selon la revendication 6, caractérisée en ce que les corps de remplissage (17) possèdent une forme sphérique et deux rangées de nervures (18) et d'espaces intermédiaires (19), et en ce que les nervures (18) et les espaces intermédiaires (19) sont configurés de telle sorte qu'un accrochage de corps de remplissage (17) voisins est impossible.

8. Procédé d'épuration d'eaux usées, faisant appel à une installation d'épuration mécanique et biologique selon les revendications 1 à 7, caractérisé en ce que la vitesse de rotation ($V_u$) à la périphérie du tube extérieur (10) est comprise entre 0,9 et 5 m/sec, et notamment entre 0,9 et 1,6 m/sec.

9. Procédé selon la revendication 1, caractérisé en ce que l'espace (13) rempli de corps de remplissage (17) du corps plongeur tourne en dessous du niveau d'eau sur plus de 75% de son diamètre.

FIG.1

FIG.2

FIG.3

FIG.4

FIG.5

FIG.6

FIG.7